# EUROPÄISCHE PATENTSCHRIFT

(11) **EP 1 505 107 B1**
(45) Veröffentlichungstag und Bekanntmachung des Hinweises auf die Patenterteilung: **11.10.2006**
(21) Anmeldenummer: 03017770.3
(22) Anmeldetag: 04.08.2003
(51) Int. Cl.: C08K 5/00, C08L 27/06

(54) **Rheologieadditiv für Kunststoffe**
Rheology additive for plastics
Additif de rhéologie pour matières plastiques

(43) Veröffentlichungstag der Anmeldung: 09.02.2005
(73) Patentinhaber: Dr. Th. Böhme KG Chem. Fabrik GmbH & Co. KG, 82538 Geretsried (DE)
(72) Erfinder: Schönmann, Gertrud, Dr., 82166 Gräfelfing (DE); Ostermann, Jürgen, 82515 Wolfratshausen (DE)
(74) Vertreter: Geyer, Fehners & Partner

(56) Entgegenhaltungen:
- DATABASE WPI Section Ch, Week 197422 Derwent Publications Ltd., London, GB; Class A25, AN 1974-40506V XP002266117 & JP 48 037492 A (NIPPON OILS & FATS CO LTD), 2. Juni 1973 (1973-06-02)
- DATABASE WPI Section Ch, Week 198314 Derwent Publications Ltd., London, GB; Class A14, AN 1983-34047K XP002266118 & SU 931 732 A (EXTRAMURAL ENG INST), 30. Mai 1982 (1982-05-30)
- DATABASE WPI Section Ch, Week 197603 Derwent Publications Ltd., London, GB; Class A14, AN 1976-04514X XP002266119 & JP 50 076159 A (KURARAY CO LTD), 21. Juni 1975 (1975-06-21)

## Beschreibung

Die Erfindung bezieht sich auf ein Rheologieadditiv für Kunststoffe, insbesondere PVC-Plastisole, Verfahren zu deren Herstellung und deren Verwendung.

Es ist bekannt, in der Kunststoffverarbeitung, insbesondere der PVC-Pastenverarbeitung, Rheologieadditive, z.B. Viskositätserniedriger, einzusetzen.

Die bisher kommerziell erhältlichen Viskositäfserniedriger werden in großen Mengen, gemessen an der eigentlichen Wirksubstanz, verwendet. Wenn solche Viskositätserniedriger eine gute Wirksamkeit zeigen, emitieren sie jedoch organische Bestandteile. Dies ist nicht nur hinsichtlich der Arbeitsplatzsicherheit sondern auch aus umwelttoxikologischen Gründen nachteilig. Werden Viskositätserniedriger mit geringen Emissionen eingesetzt, haben sie eine sehr schlechte Wirksamkeit. Wenn Viskositätserniedriger verwendet werden, die eine geringe Emission bei guter Wirksamkeit besitzen, führen diese jedoch zu Vergilbungen in den PVC-Produkten.

Der vorliegenden Erfindung liegt somit die Aufgabe zugrunde, ein Rheologieadditiv, insbesondere einen Viskositätserniedriger, bereitzustellen, der nicht die aus dem Stand der Technik bekannten Nachteile aufweist.

Erfindungsgemäß wird dies durch eine Zusammensetzung erreicht, umfassend
a) 2,5 Gew.-% bis 15 Gew.-%, bezogen auf die Zusammensetzung, einer Verbindung der Formel (1)

   RO-(R¹-O)ₙ- (R²-O)ₘ-H (1),

   wobei
   R für H oder C4-C24-Alkyl,
   R¹ für (CH₂)₂ und R² für CH₂-CH(CH₃) stehen und
   n und m jeweils 0 bis 100 sein können, mit der Maßgabe, daß n + m > 0 ist, wobei die Anordnung von (R¹-O) und (R²-O) statistisch, alternierend oder als Block sein kann oder eine Mischform dieser Anordnungen vorliegt, und
b) 40 Gew.-% bis 95 Gew.-%, bezogen auf die Zusammensetzung, Mineralöl.

Bei der Verbindung der Formel (1) handelt es sich um eine Verbindung auf der Basis eines Polyalkylenglykols, bei dem das H-Atom einer OH-Gruppe gegebenenfalls durch einen C4-C24-Alkylrest substituiert sein kann. Es kann sich bei dem Polyalkylenglykol-Anteil der Verbindung der Formel (1) um ein Polyethylenglykol-Homopolymer (m=0, n>0) oder Polypropylenglykol- Homopolymer (n=0, m>0) handeln. Ein Vertreter davon ist z.B. ein Polyalkylenglykol aus 3 Ethylenoxid-Einheiten, wobei ggf. ein H-Atom einer OH-Gruppe des Polyalkylenglykols, mit einem linearen C10-C18-Alkyl substituiert sein kann, d.h. in Formel (1) steht R für lineares C10-C18-Alkyl, n=3 und m=0.

Der Polyalkylenglykolanteil der Verbindung der Formel (1) kann ein Copolymer aus Ethylenoxid (EO) und Propylenoxid (PO) sein. In einem solchen Copolymer können die von Ethylenoxid bzw. Propylenoxid abgeleiteten Einheiten alternierend oder statistisch angeordnet sein, oder es handelt sich bei den Copolymeren um ein Block-Copolymer. Es können auch Mischformen dieser Copolymer-Typen vorliegen. Beispielsweise kann in der Mitte des Copolymers ein Polymerblock aus Ethylenoxid oder Propylenoxid vorliegen, wobei der Block 5 bis 50 von Ethylenoxid bzw. Propylenoxid abgeleitete Einheiten aufweisen kann, und links und rechts von diesem Block kann das Copolymer eine statistische Copolymer-Einheit aus Ethylenoxid und Propylenoxid haben, wobei 5 bis 50 von Ethylenoxid abgeleitete Einheiten und 5 bis 50 von Propylenoxid abgeleitete Einheiten vorliegen können.

Der Alkyl-Rest R in der Verbindung der Formel (1) kann linear oder verzweigt sein. Er kann über jedes seiner C-Atome mit dem Polyalkylenglykol-Teil der Verbindung der Formel (1) verbunden sein.

In einer bevorzugten Ausführungsform der erfindungsgemäßen Zusammensetzung leitet sich die Verbindung der Formel (1) von 7-Tridecanol mit 2 bis 15, insbesondere 6, von Ethylenoxid abgeleiteten Einheiten und 2 bis 30, insbesondere 3, von Propylenoxid abgeleiteten Einheiten ab, wobei die EO- und PO-Einheiten statistisch verteilt sind.

Die Verbindungen gemäß der Formel (1) können in dem Fachmann bekannter Weise hergestellt werden. Polyalkylenglykole können durch übliche Polyaddition von Ethylenoxid und/oder Propylenoxid in Gegenwart von Katalysatoren, z.B. Alkali, an Wasser hergestellt werden. Wenn die Verbindung der Formel (1) den Alkyl-Rest R aufweist, so kann dieser von einem Alkohol stammen. Zur Herstellung einer solchen Verbindung kann der Alkohol in einem Reaktionsgefäß vorgelegt werden. Dazu kann der Katalysator, z.B. Alkali zugegeben und das so erhaltene Gemisch dann aufgeheizt werden.

Anschließend kann Ethylenoxid und/oder Propylenoxid zudosiert werden. Nach Vervollständigung der Reaktion kann der Katalysator neutralisiert werden.

Die als Komponente (a) in der erfindungsgemäßen Zusammensetzung vorliegende Verbindung der Formel (1) ist an der Erniedrigung der Viskosität der PVC-Plastisole beteiligt. Dabei wurde überraschenderweise ein besonders ausgeprägter Synergismus mit dem ebenfalls in der erfindungsgemäßen Zusammensetzung vorliegenden Mineralöl gefunden. Dies bedeutet, daß die gleichzeitige Anwesenheit der Verbindung der Formel (1) und des Mineralöls in der erfindungsgemäßen Zusammensetzung eine größere Viskositätserniedrigung als diese Komponenten alleine bewirkt. Ferner kann die Verbindung der Formel (1) als Dispergiermittel fungieren, und zwar sowohl für das in der erfindungsgemäßen Zusammensetzung vorliegende Mineralöl als auch für die PVC-Teilchen, den Füllstoffen und Pigmenten der PVC-Plastisole.

In einer bevorzugten Ausführungsform der erfindungsgemäßen Zusammensetzung liegt die Verbindung der Formel (1) in einer Menge von 2,5 Gew.-% bis 10 Gew.-%, bezogen auf die erfindungsgemäße Zusammensetzung, vor. Es wurde überraschenderweise gefunden, daß mit diesen geringen Mengen eine besonders gute Wirksamkeit, insbesondere Viskositätserniedrigung, der erfindungsgemäßen Zusammensetzung erreicht werden kann. Dies war deshalb überraschend, weil bei bisher kommerziell erhältlichen Viskositätserniedrigern die dafür verantwortlichen Wirkstoffe in wesentlich größeren Mengen eingesetzt werden mußten, um eine gute Viskositätserniedrigung zu erreichen.

In der erfindungsgemäßen Zusammensetzung liegt ein Mineralöl vor. Bei Mineralölen handelt es sich um eine Sammelbezeichnung für die aus mineralischen Rohstoffen (Erdöl, Braun- und Steinkohlen, Holz, Torf) gewonnenen flüssigen Destillationsprodukte, die im wesentlichen Gemische von gesättigten Kohlenwasserstoffen sind. In der erfindungsgemäßen Zusammensetzung können die für Viskositätserniedriger übliche Mineralöle eingesetzt werden. Dabei kann es sich um paraffinische, naphthenische und aromatische Mineralöle und Gemische davon handeln.

In einer bevorzugten Ausführungsform der erfindungsgemäßen Zusammensetzung weist das Mineralöl einen Siedebereich beginnend bei 250 °C oder mehr auf. Durch diesen hohen Siedebereich werden Emissionen deutlich vermindert, was hinsichtlich der Arbeitsplatzsicherheit und aus umwelttoxikologischen Gründen besonders günstig ist.

In der erfindungsgemäßen Zusammensetzung kann weiterhin ein Emulgator vorliegen, beispielsweise in einer Menge von 2 bis 25 Gew.-%, insbesondere 5 bis 15 Gew.-% und ganz besonders etwa 10 Gew.-%, bezogen auf die erfindungsgemäße Zusammensetzung.

Dieser Emulgator dient dazu, eine Phasentrennung der Verbindung der Formel (1) und des Mineralöls zu verhindern. Demzufolge wird der Emulgator vor allem dann eingesetzt, wenn sich die Phasen dieser beiden Bestandteile der erfindungsgemäßen Zusammensetzung trennen würden. Trennen sich die Phasen der Verbindung der Formel (1) und des Mineralöls in der erfindungsgemäßen Zusammensetzung nicht, ist es nicht unbedingt notwendig, einen Emulgator zu verwenden. Des weiteren wurde überraschenderweise festgestellt, daß die Emulgatoren auch zur Viskositätserniedrigung beitragen. Dies bedeutet, daß erfindungsgemäße Zusammensetzungen, die neben der Verbindung der Formel (1) und dem Mineralöl einen Emulgator aufweisen, eine bessere Viskositätserniedrigung zeigen als solche Zusammensetzungen, die nur die Verbindung der Formel (1) und ein Mineralöl enthalten.

Bei dem in der erfindungsgemäßen Zusammensetzung vorliegenden Emulgator kann es sich um ein C4-C18-Alkylphenolethoxylat mit 2-4 von Ethylenoxid abgeleiteten Einheiten, insbesondere n-Nonylphenol mit 2 EO, handeln.

Der in der erfindungsgemäßen Zusammensetzung vorliegenden Emulgator kann ferner ein teilveresterter Polyalkohol sein. Dieser wird dadurch erhalten, daß mehrwertige Alkohole mit 2 bis 6 Kohlenstoffatomen und 2 bis 6 OH-Gruppen z.B. Glycerin und Sorbit, mit einer C1-C22-Carbonsäure verestert werden. Bei den Carbonsäuren kann es sich um geradkettige oder verzweigte, gesättigte oder ungesättigte Säuren handeln. Insbesondere werden Fettsäuren eingesetzt. Unter Teilveresterung wird verstanden, daß nicht alle aber mindestens eine der OH-Gruppen des mehrwertigen Alkohols mit der Carbonsäure verestert sind. Die teilveresterten Polyalkohole können ferner 2 bis 10 von Ethylenoxid und/oder Propylenoxid abgeleitete Einheiten aufweisen. Vertreter dieser sind Sorbitanmonooleat und Sorbitanmonooleat mit zwei EO.

Als Emulgator kann ferner ein Fettsäurepolyglycerinteilester in der erfindungsgemäßen Zusammensetzung eingesetzt werden. Der Polyglycerin-Anteil dieses Emulgators kann eine von 2 bis 10 von Glycerin abgeleitete Einheit aufweisen. Unter Teilester wird ein Ester verstanden, bei dem mindestens eine nicht aber alle der OH-Gruppen des Polyglycerins verestert sind. Beispiel eines Fettsäurepolyglycerinteilesters ist Polyglycerin-1/4-laurat, wobei das Polyglycerin 3 Glycerineinheiten aufweist.

Die erfindungsgemäße Zusammensetzung kann noch weitere Komponenten aufweisen, wie sie üblicherweise in Viskositätserniedrigern eingesetzt werden. Es kann sich hierbei um Ester von Fettsäuren mit C1-C24 Monoalkoholen handeln. Diese fungieren als Trägerflüssigkeiten und können das Mineralöl teilweise ersetzen. Bei den weiterhin vorhandenen Komponenten kann es sich um C10-C20-α-Olefine handeln, die ebenfalls das Mineralöl teilweise ersetzen können. Ferner können diese weiteren Komponenten mit 2-10 EO ethoxylierte Fettsäuren sein, die wiederum das Mineralöl teilweise ersetzen können. Diese weiteren Komponenten können in Mengen von 0 bis 50 Gew.-%, bezogen auf die erfindungsgemäße Zusammensetzung, vorliegen.

Die erfindungsgemäße Zusammensetzung, insbesondere in den vorstehend geschilderten bevorzugten Ausführungsformen, weist eine Reihe von Vorteilen auf. Sie ist beim Einsatz in PVC-Plastisolen als Viskositätserniedriger besonders wirksam. Dabei werden Emissionen, die aus arbeitstechnischer und umwelttoxikologischer Hinsicht nachteilig sind, deutlich vermindert, vor allem bei den Verarbeitungstemperaturen der PVC-Plastisole (etwa 180°C). Eine Vergilbung, die durch Viskositätserniedriger nach dem Stand der Technik bewirkt werden kann, ist in den PVC-Produkten nicht festgestellt worden. Die in der erfindungsgemäßen Zusammensetzung vorhandenen Komponenten fungieren nicht als Weichmacher für das PVC. In diesem Zusammenhang sei darauf hingewiesen, daß es unerwünscht ist, wenn die Viskositätserniedriger weichmachende Eigenschaften haben. Durch die hervorragende Wirksamkeit der in der erfindungsgemäßen Zusammensetzung vorliegenden Komponenten zur Viskositätserniedrigung können diese in überraschend geringen Mengen eingesetzt werden, wobei zum einen eine vollkommen ausreichende Wirksamkeit erreicht wird und zum anderen die Kosten reduziert werden.

Die Herstellung der erfindungsgemäßen Zusammensetzung kann dadurch erfolgen, daß die darin vorhandenen Komponenten in einem Gefäß gemischt und homogen verrührt werden. Es hat sich dabei als günstig herausgestellt, diesen Misch- und Rührvorgang in Abwesenheit von Wasser durchzuführen. Dies kann beispielsweise dadurch erreicht werden, daß trockene Geräte und Materialien eingesetzt werden.

Aufgrund der vorstehend geschilderten Eigenschaften eignet sich die erfindungsgemäße Zusammensetzung bestens als Viskositätserniedriger für PVC-Plastisole. Dabei kann die erfindungsgemäße Zusammensetzung in an sich bekannter Weise eingesetzt werden. Die Menge der erfindungsgemäßen Zusammensetzung kann 0,5 Gew.-% bis 5 Gew.-%, bezogen auf die PVC-Pasten, betragen.

Die Erfindung wird nachstehend unter Bezugnahme auf die Beispiele näher erläutert, ohne sie darauf einzuschränken.

### Beispiele:

Soweit in den nachfolgenden Beispielen nichts anderes angegeben ist, beziehen sich die Mengenangaben auf Gew.-%.

Die in Tabelle 1 angegebenen Komponenten wurden in den ebenfalls angegebenen Mengen gemischt und homogen verrührt. Dabei handelt es sich bei den Beispielen 1 bis 7 und 10 bis 13 um erfindungsgemäße Zusammensetzungen. Die Beispiele 8 und 9 sind Vergleichbeispiele.

Wie den in Tabelle 1 angegebenen Ergebnissen der Flüchtigkeitsmessung entnommen werden kann, wurden bei den erfindungsgemäßen Zusammensetzungen weniger als 1% emittiert, wohingegen bei den Vergleichsbeispielen mehr als 10% verflüchtigt wurden.

**Tabelle 1**

| | 1 | 2 | 3 | 4 | 5 | 6 | 7 | 8 | 9 | 10 | 11 | 12 | 13 |
|---|---|---|---|---|---|---|---|---|---|---|---|---|---|
| Alkyl-EO/PO-Addukt¹ | 2,5 | 7,5 | 10 | 5 | 5 | 5 | 5 | | | | | 5 | 5 |
| Alkyl-EO-Addukt² | | | | | | | | | | 5 | 10 | | |
| Mineralöl Siedebereich³ größer 250°C | 87,5 | 82,5 | 80 | 95 | 85 | 80 | 90 | | 40 | 85 | 80 | 90 | 85 |
| Mineralöl Siedebereich⁴ 110 -180°C | | | | | | | | 80 | | | | | |
| Mineralöl Siedebereich⁵ 190 -240°C | | | | | | | | | 40 | | | | |
| n-Nonylphenol mit 2 EO | 10 | 10 | 10 | | 10 | 15 | | 10 | 20 | 10 | 10 | | |
| Sorbitanmonooleat | | | | | | | 5 | | | | | | |
| Polyglycerin - ¼ - | | | | | | | | | | | | 5 | 10 |
| C... - α - Olefin | | | | | | | | 10 | | | | | |
| Flüchtigkeit (20g, 180°, 5 min) | <1% | <1% | <1% | <1% | <1% | <1% | <1% | >10% | >10% | <1% | <1% | <1% | <1% |

| | | | | | | | | | | | | | |
|---|---|---|---|---|---|---|---|---|---|---|---|---|---|
| ¹ iso-Tridecyl mit 6 EO und 3 PO, statistisch verteilt ² C₁₀-C₁₈ linearer Alkohol mit 3 EO ³ paraffinisches naphthenisches aromatisches Mineralöl (high refined) ⁴ rein paraffinisches Mineralöl ⁵ paraffinisches, naphthenisches Mineralöl | | | | | | | | | | | | | |

Die gemäß den Beispielen 1 bis 13 erhaltenen Zusammensetzungen wurden in übliche PVC-Plastisole eingearbeitet und auf ihre visositätserniedrigende Wirkung getestet. Die Zusammensetzungen sind in der Tabelle 2 angegeben, wobei die Numerierung der Beispiele den Herstellungsbeispielen in Tabelle 1 entspricht.

Wie den Ergebnissen der Viskositätsmessung entnommen werden kann, erniedrigt sich die Viskosität der PVC-Plastisole durch Zugabe der Viskositätserniedriger aus Beispiel 1 bis 13. Im Vergleich dazu beträgt die Viskosität von PVC-K70 Plastisolen ohne Zusatz von Viskositätserniedriger sofort nach dem Mischen der Komponenten etwa 12.000 mPas und eine Stunde nach dem Mischen etwa 27.000 mPas oder mehr. Die entsprechenden Viskositäten für PVC-K80 betragen 15.000 mPas bzw. 40.000 mPas.

**Tabelle 2**

| | 1 | 2 | 3 | 4 | 5 | 6 | 7 | 8 | 9 | 10 | 11 | 12 | 13 |
|---|---|---|---|---|---|---|---|---|---|---|---|---|---|
| Mikro-Suspensions-PVC¹ | 70 | 70 | 70 | 70 | 70 | 70 | 70 | 70 | 70 | 70 | 70 | 70 | 70 |
| Extender PVC | 30 | 30 | 30 | 30 | 30 | 30 | 30 | 30 | 30 | 30 | 30 | 30 | 30 |
| Weichmacher | 40 | 40 | 40 | 40 | 40 | 40 | 40 | 40 | 40 | 40 | 40 | 40 | 40 |
| Ba/Zn-Stabilisator | 1 | 1 | 1 | 1 | 1 | 1 | 1 | 1 | 1 | 1 | 1 | 1 | 1 |
| Viskositätserniedriger | 3 | 3 | 3 | 3 | 3 | 3 | 3 | 3 | 3 | 3 | 3 | 3 | 3 |
| Viskositätsmessungen (Brookfied Model DV-I-Viscosimeter, Spindel 6 RPM - 20 mPas | | | | | | | | | | | | | |
| sofort nach mischen | 9000 | 7800 | 8400 | 7250 | 6750 | 6450 | 7100 | 5900 | 6850 | 4450 | 4650 | 4350 | 4150 |
| | | | | | | | | | | | | | |
| nach 1 Std. | 18850 | 18950 | 18150 | 16650 | 14350 | 13800 | 15100 | 11950 | 13700 | 10850 | 10450 | 9750 | 9200 |
| | | | | | | | | | | | | | |
| nach 2 Std. | 19850 | 20650 | 19750 | 17900 | 15050 | 14450 | 15650 | 12600 | 13850 | 11200 | 11300 | 10850 | 10250 |

| | | | | | | | | | | | | | |
|---|---|---|---|---|---|---|---|---|---|---|---|---|---|
| ¹ PUC K 80 in Bsp. 1 - 9; PUC K 70 in Bsp. 10 - 13 ² Dioctylphthalat in Bsp. 1 - 9 und Düsononylphthalat in Bsp. 10 - 13 | | | | | | | | | | | | | |

## Patentansprüche

1. Zusammensetzung, die als Rheologieadditv für PVC-Plastisole geeignet ist, umfassend
a) 2,5 Gew.-% bis 15 Gew.-%, bezogen auf die Zusammensetzung, einer Verbindung der Formel (1)
RO-(R¹-O)ₙ-(R²-O)ₘ-H (1),
wobei
R für H oder C4-C24-Alkyl steht,
R¹ für (CH₂)₂ und R² für CH₂-CH(CH₃) stehen und
n und m jeweils 0 bis 100 sein können, mit der Maßgabe, daß n + m > 0 ist, wobei die Anordnung von (R¹-O) und (R²-O) statistisch, alternierend oder als Block sein kann oder eine Mischform dieser Anordnungen vorliegt, und
b) 40 Gew.-% bis 95 Gew.-%, bezogen auf die Zusammensetzung, Mineralöl.

2. Zusammensetzung nach Anspruch 1, wobei m=0 und n>0 oder n=0 und m>0 ist.

3. Zusammensetzung nach einem der vorhergehenden Ansprüche, wobei die Verbindung der Formel (1) in der Mitte einen Polymerblock aus Ethylenoxid oder Propylenoxid aufweist, wobei der Block 5 bis 50 von Ethylenoxid bzw. Propylenoxid abgeleitete Einheiten enthält, und links und rechts von diesem Block liegt eine statistische Copolymer-Einheit aus Ethylenoxid und Propylenoxid vor, wobei die statistische Copolymer-Einheit 5 bis 50 von Ethylenoxid abgeleitete Einheiten und 5 bis 50 von Propylenoxid abgeleitete Einheiten aufweist.

4. Zusammensetzung nach einem der vorhergehenden Ansprüche, wobei die Verbindung der Formel (1) das Umsetzungsprodukt von 7-Tridecanol mit 2 bis 15 von Ethylenoxid abgeleiteten Einheiten und 2 bis 30 von Propylenoxid abgeleiteten Einheiten ist, wobei die Ethylenoxid- und Propylenoxid-Einheiten statistisch verteilt sind.

5. Zusammensetzung nach einem der vorhergehenden Ansprüche, wobei das Mineralöl einen Siedebereich aufweist, der bei 250°C oder mehr beginnt.

6. Zusammensetzung nach einem der vorhergehenden Ansprüche, wobei sie weiterhin einen Emulgator aufweist.

7. Verfahren zur Herstellung einer Zusammensetzung nach einem der vorhergehenden Ansprüche, wobei 2,5 Gew.-% bis 15 Gew.-% der Verbindung der Formel (1), 40 Gew.-% bis 95 Gew.-% Mineralöl und gegebenenfalls der Emulgator gemischt und homogen verrührt werden.

8. Verwendung einer Zusammensetzung nach einem der Ansprüche 1 bis 6 zur Viskositätserniedrigung von PVC-Plastisolen.

## Claims

1. Composition suitable as a rheology additive for PVC plastisols, comprising
a) 2.5% by weight to 15% by weight, based on the composition, of a compound of formula (1):
RO-(R¹-O)ₙ-(R²-O)ₘ-H (1),
in which
R is H or C4-C24-alkyl,
R¹ is (CH₂)₂ and R² is CH₂-CH(CH₃) and
n and m can each be 0 to 100, with the proviso that n + m > 0, it being possible for (R¹-O) and (R²-O) to be in a random, alternating or block arrangement or a mixed form of these arrangements, and
b) 40% by weight to 95% by weight, based on the composition, of mineral oil.

2. Composition according to Claim 1 wherein m = 0 and n > 0, or n = 0 and m > 0.

3. Composition according to one of the preceding claims wherein the compound of formula (1) has a polymer block of ethylene oxide or propylene oxide in the middle, the block containing 5 to 50 units derived from ethylene oxide or propylene oxide, and a random copolymer unit of ethylene oxide and propylene oxide is present to the left and right of said block, the random copolymer unit having 5 to 50 units derived from ethylene oxide and 5 to 50 units derived from propylene oxide.

4. Composition according to one of the preceding claims wherein the compound of formula (1) is the reaction product of 7-tridecanol with 2 to 15 units derived from ethylene oxide and 2 to 30 units derived from propylene oxide, the ethylene oxide and propylene oxide units being randomly distributed.

5. Composition according to one of the preceding claims wherein the mineral oil has a boiling range starting at 250°C or above.

6. Composition according to one of the preceding claims which also contains an emulsifier.

7. Process for the preparation of a composition according to one of the preceding claims, wherein 2.5% by weight to 15% by weight of the compound of formula (1), 40% by weight to 95% by weight of mineral oil and optionally the emulsifier are mixed and stirred until homogeneous.

8. Use of a composition according to one of Claims 1 to 6 for lowering the viscosity of PVC plastisols.

## Revendications

1. Composition qui est appropriée comme additif de rhéologie pour des plastisols à base de PVC, comprenant
a) 2,5 à 15 % en poids, par rapport à la composition, d'un composé de formule (1)
RO-(R¹-O)ₙ - (R²-O)ₘ-H (1),
dans laquelle
R est H ou un groupe alkyle en C4 à C24,
R¹ est (CH₂)₂ et R² est CH₂-CH(CH₃) et
n et m peuvent être respectivement un nombre de 0 à 100, à condition que n + m > 0, la configuration de (R¹―O) et (R²―O) pouvant être statistique, alternante ou en bloc ou une forme mixte de ces configurations, et
b) 40 à 95 % en poids d'huile minérale, par rapport à la composition.

2. Composition selon la revendication 1, dans laquelle m = 0 et n > 0 ou n = 0 et m > 0.

3. Composition selon l'une quelconque des revendications précédentes, dans laquelle le composé de formule (1) présente au milieu un bloc polymère d'oxyde d'éthylène ou d'oxyde de propylène et à gauche et à droite de ce bloc se trouve un motif de copolymère statistique d'oxyde d'éthylène et d'oxyde de propylène, le motif de copolymère statistique présentant 5 à 50 des motifs dérivés d'oxyde d'éthylène et 5 à 50 des motifs dérivés d'oxyde de propylène.

4. Composition selon l'une quelconque des revendications précédentes, dans laquelle le composé de formule (1) est le produit de transformation du 7-tridécanol avec 2 à 15 des motifs dérivés d'oxyde d'éthylène et 2 à 30 des motifs dérivés de propylène, les motifs d'oxyde d'éthylène et d'oxyde de propylène étant répartis de manière statistique.

5. Composition selon l'une quelconque des revendications précédentes, l'huile minérale présentant un intervalle d'ébullition qui commence à 250°C ou plus.

6. Composition selon l'une quelconque des revendications précédentes, qui présente en outre un émulsifiant.

7. Procédé de fabrication d'une composition selon l'une quelconque des revendications précédentes, dans lequel 2,5 à 15 % en poids du composé de formule (1), 40 à 95 % en poids d'huile minérale et éventuellement, l'émulsifiant, sont mélangés et agités de manière homogène.

8. Utilisation d'une composition selon l'une quelconque des revendications 1 à 6, pour réduire la viscosité des plastisols à base de PVC.
